(19) Europäisches Patentamt
European Patent Office
Office européen des brevets

(11) **EP 2 892 944 B1**

## (12) EUROPEAN PATENT SPECIFICATION

(45) Date of publication and mention
of the grant of the patent:
**28.12.2016 Bulletin 2016/52**

(51) Int Cl.:
***C08G 77/50*** *(2006.01)*      ***C08L 83/04*** *(2006.01)*
***C08L 83/07*** *(2006.01)*

(21) Application number: **13766720.0**

(86) International application number:
**PCT/JP2013/074451**

(22) Date of filing: **04.09.2013**

(87) International publication number:
**WO 2014/038720 (13.03.2014 Gazette 2014/11)**

(54) **CONDUCTIVE SPONGE-FORMING SILICONE RUBBER COMPOSITION AND CONDUCTIVE SILICONE RUBBER SPONGE**

SILIKON-GUMMI-ZUSAMMENSETZUNG ZUR FORMUNG EINES LEITFÄHIGEN SCHWAMMS UND LEITFÄHIGER SILIKON-GUMMI-SCHWAMM

COMPOSITION DE CAOUTCHOUC DE SILICONE FORMANT UNE ÉPONGE CONDUCTRICE ET ÉPONGE DE CAOUTCHOUC DE SILICONE CONDUCTRICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2012 JP 2012195033**

(43) Date of publication of application:
**15.07.2015 Bulletin 2015/29**

(73) Proprietor: **Dow Corning Toray Co., Ltd.**
**Tokyo 100-0004 (JP)**

(72) Inventors:
• **KURUSU, Hidetoshi**
**Ichihara-shi**
**Chiba 299-0108 (JP)**
• **IRIE, Masakazu**
**Ichihara-shi**
**Chiba 299-0108 (JP)**
• **AKITOMO, Hiroshi**
**Ichihara-shi**
**Chiba 299-0108 (JP)**

(74) Representative: **Fyfe, Fiona Allison Watson et al**
**Murgitroyd & Company**
**Scotland House**
**165-169 Scotland Street**
**Glasgow G5 8PL (GB)**

(56) References cited:
**US-A- 5 482 978      US-A1- 2011 021 649**

• **GARDNER R F G ET AL: "The electrical properties of alpha ferric oxide-II. - Ferric oxide of high purity", JOURNAL OF PHYSICS AND CHEMISTRY OF SOLIDS, PERGAMON PRESS, LONDON, GB, vol. 24, no. 10, 1 October 1963 (1963-10-01), pages 1183-1186,IN1, XP024721627, ISSN: 0022-3697, DOI: 10.1016/0022-3697(63)90235-X [retrieved on 1963-10-01]**

**Description**

Technical Field

The present invention relates to a conductive sponge-forming liquid silicone rubber composition and a conductive silicone rubber sponge. More specifically, the present invention relates to a conductive silicone rubber sponge-forming composition which can form a conductive silicone rubber sponge having fine, uniform and continuous porosity, and to a conductive silicone rubber sponge having fine, uniform and continuous porosity in which the voltage dependence of the electrical resistance is low.

Priority is claimed on Japanese Patent Application No. 2012-195033, filed on September 5, 2012.

Background Art

There is a conventionally known conductive silicone rubber sponge formed by blending carbon black or the like into a silicone rubber as a conductive material to control the electrical resistance to within the range of from $1 \times 10^1$ to $1 \times 10^{12} \Omega \cdot cm$ and further adding a foaming agent and curing by heating. Since this conductive silicone rubber sponge has excellent heat resistance and weather resistance and is lightweight, the sponge is used in a wide range of applications as an automotive part or an office equipment part while taking advantage of these characteristics. More specifically, the sponge is used as various sealing materials, packing, gaskets, O-rings, roll coating materials, and the like.

A widely used conventional method for forming such a conductive silicone rubber sponge is a method of blending a pyrolytic organic foaming agent such as azobisisobutyronitrile, but this method has problems in that the characteristics of the sponge molded product are diminished by the organic foaming agent decomposition residue, the decomposition gas itself is toxic or has an odor, and curing is inhibited by the organic foaming agent when a platinum catalyst is used as a curing agent. Further, the change in the resistance when the applied voltage is varied - that is, the voltage dependence of the resistance - is large, which makes it difficult to obtain a conductive member with stable electrical resistance characteristics.

Japanese Unexamined Patent Application Publication No. 2002-114860 describes a silicone rubber sponge-forming composition in which a water-absorbing polymer containing water is blended into a hydrosilylation reaction crosslinkable silicone rubber composition. International Publication WO2005/085357 Pamphlet and International Publication WO2004/074378 Pamphlet also describe a hydrosilylation reaction crosslinkable silicone rubber composition and an emulsion composition for a silicone rubber sponge comprising an aqueous solution of a water-soluble polymer and an emulsifier. These sponge-forming compositions can be cured and crosslinked by heating or the like to form a silicone rubber molded body in a hydrated state, and a silicone rubber sponge can be formed by then removing the water by heating or the like. However, these sponge-forming compositions have problems in that mold contamination is generated at the time of molding due to the polymer to be blended, which may diminish the heat resistance of the resulting sponge or cause defects in appearance. In addition, the fineness of the resulting sponge pores has been insufficient.

Japanese Unexamined Patent Application Publication No. 2008-214625 describes an improved hydrosilylation reaction crosslinkable silicone rubber composition with a reduced coefficient of shrinkage at the time of molding and an emulsion composition for a silicone rubber comprising water containing smectite clay and an emulsifier.

The present inventors completed the present invention as a result of conducting dedicated research in order to solve these problems. That is, an object of the present invention is to provide a conductive silicone rubber sponge-forming composition capable of forming a conductive silicone rubber sponge having fine, uniform and continuous porosity and a conductive silicone rubber sponge having fine, uniform and continuous porosity in which the voltage dependence of the electrical resistance is low.

Disclosure of Invention

The conductive sponge-forming silicone rubber composition of the present invention comprises:

(A) 100 parts by mass of an alkenyl group-containing polydiorganosiloxane composed of:

(A1) from 0 to 90 parts by mass of a polydiorganosiloxane having both molecular terminals capped with alkenyl groups and not having any alkenyl groups in molecular side chains; and
(A2) from 10 to 100 parts by mass of a polydiorganosiloxane having two or more alkenyl groups in molecular side chains;

(B) a polyorganosiloxane having two or more silicon-bonded hydrogen atoms in a molecule, in an amount such that the number of moles of silicon-bonded hydrogen atoms in component (B) is from 0.4 to 20 per 1 mole of alkenyl groups in component (A);

(C) from 1 to 100 parts by mass of a conductive filler;

(D) from 10 to 250 parts by mass of a mixture comprising water and an inorganic thickener;

(E) from 0.1 to 15 parts by mass of an emulsifier;

(F) a hydrosilylation reaction catalyst, in an amount sufficient for crosslinking the composition; and

(G) from 0.001 to 5 parts by mass of a curing retarder, wherein component (C) is carbon black.

The sponge-forming liquid silicone rubber composition described above preferably further contains (H) a fine silica powder within the range of not more than 20 parts by mass per 100 parts by mass of component (A).

Component (C) is carbon black.

In addition, component (D) is preferably a mixture of water and smectite clay. A hydrophilic composite material comprising smectite clay and an anionic polymer is preferable as the smectite clay.

In addition, the molar ratio of the silicon-bonded hydrogen atoms in component (B) per one mole of silicon-bonded alkenyl groups in component (A) is preferably within the range of from 1.5 to 20.

The conductive silicone rubber sponge of the present invention is obtained by crosslinking and curing the aforementioned conductive sponge-forming liquid silicone rubber composition.

The aforementioned conductive silicone rubber sponge preferably has an average pore diameter of at least 1 $\mu$m and less than 50 $\mu$m and continuous porosity of at least 90%.

The aforementioned conductive silicone rubber sponge can be suitably used as an elastic material for a roll or a belt of an image forming apparatus.

Effects of Invention

The conductive silicone rubber composition of the present invention is characterized in that a conductive silicone rubber sponge having fine, uniform, and continuous porosity is formed by crosslinking and curing and in that the voltage dependence of the resistance of the resulting conductive silicone rubber sponge is low.

Detailed Description of the Invention

Component (A), which is one of the main components of the silicone rubber composition of the present invention, is an alkenyl group-containing polydiorganosiloxane having silicon-bonded alkenyl groups in a molecule. Component (A) is composed of (A1) a polydiorganosiloxane having both molecular terminals capped with alkenyl groups and not having any alkenyl groups in molecular side chains and (A2) a polydiorganosiloxane having two or more alkenyl groups in molecular side chains. The compounding ratio of component (A1) and component (A2) is within the range of (A1):(A2)= from 0:100 to 90:10, preferably, within the range of (A1):(A2)= from 0:100 to 75:25, and, even more preferably, within the range of (A1):(A2)= from 10:90 to 50:50. This is because the coefficient of shrinkage of the silicone rubber sponge formed from the silicone rubber composition of the present invention is dramatically improved by combining component (A1) and component (A2).

The viscosity at 25°C of the polydiorganosiloxane (A1) having both molecular terminals capped with alkenyl groups and not having any alkenyl groups in molecular side chains is preferably within the range of from 0.1 to 100 Pa·s and more preferably within the range of from 0.1 to 40 Pa·s. A very small amount of the molecular terminals of the polydiorganosiloxane of component (A1) may be substituted with hydroxyl groups or organic groups other than alkenyl groups. The siloxane skeleton of the polyorganosiloxane of component (A1) may be straight-chained or branched and may comprise a combination of both structures. However, component (A1) is preferably an essentially straight-chained polydiorganosiloxane, the main chain of which consists of repeating diorganosiloxane units and both molecular chains of which are capped with alkenyldiorganosiloxy groups.

Examples of the alkenyl groups of component (A1) include vinyl groups, allyl groups, propenyl groups, isopropenyl groups, butenyl groups, isobutenyl groups, pentenyl groups, hexenyl groups, and heptenyl groups, and vinyl groups are preferable. Examples of silicon-bonded organic groups other than alkenyl groups in component (A1) include unsubstituted or substituted monovalent hydrocarbon groups ordinarily having from 1 to 10 carbons and preferably having from 1 to 8 carbons such as alkyl groups such as methyl groups, ethyl groups, propyl groups, butyl groups, pentyl groups, and hexyl groups; cycloalkyl groups such as cyclopentyl groups and cyclohexyl groups; aryl groups such as phenyl groups, tolyl groups, xylyl groups, and naphthyl groups; aralkyl groups such as benzyl groups and phenethyl groups; and halogen-substituted alkyl groups such as 3,3,3-trifluoropropyl groups and 3-chloropropyl groups, and methyl groups are preferable.

The viscosity at 25°C of the polydiorganosiloxane (A2) having two or more alkenyl groups in molecular side chains is preferably within the range of from 0.1 to 100 Pa·s and more preferably within the range of from 0.1 to 40 Pa·s.

The alkenyl groups in component (A2) may be present not only in molecular side chains but also on the molecular terminals. A small amount of the molecular terminals of the polydiorganosiloxane of component (A2) may be substituted with hydroxyl groups or the like. The siloxane skeleton of the polyorganosiloxane of component (A2) may be straight-chained or branched and may comprise a combination of both structures. However, component (A2) is preferably an essentially straight-chained polydiorganosiloxane, the main chain of which consists of repeating diorganosiloxane units and both molecular chains of which are capped with alkenyldiorganosiloxy groups or triorganosiloxy groups not containing alkenyl groups.

The alkenyl groups of component (A2) are the same as those of the aforementioned component (A1). Moreover, the silicon-bonded organic groups other than alkenyl groups in component (A2) are the same as those of the aforementioned component (A1).

Component (B) is a polyorganosiloxane having at least two silicon-bonded hydrogen atoms in a molecule and is a crosslinking agent of the silicone rubber composition of the present invention. Silicon-bonded hydrogen atoms may be positioned in terminal siloxane units and/or in siloxane units in polymer chains. The polyorganosiloxane is preferably a straight-chain siloxane polymer which contains $RHSiO_{2/2}$ units and/or $R_2XSiO_{1/2}$ units (where R is an unsubstituted or substituted monovalent hydrocarbon group - preferably a methyl group - having from 1 to 10 carbons and preferably from 1 to 8 carbons as in the aforementioned organic groups other than alkenyl groups in component (A), and X represents a hydrogen atom or R) as essential units in the molecule and optionally containing $R_2SiO_{2/2}$ units.

The total number of moles of silicon-bonded hydrogen atoms (that is, SiH groups) present in component (B) is preferably from 0.4 to 20 and more preferably from 0.4 to 5.0 per one mole of alkenyl groups in component (A). Accordingly, the relative amount of component (B) per 100 parts by mass of component (A) is preferably determined appropriately within the range of from 1 to 1000 parts by mass, for example, so that this relationship is maintained. From the perspective of improving the compression set of a silicone rubber sponge formed from the silicone rubber composition of the present invention, the total amount of hydrogen atoms (that is, SiH groups) is preferably from 1.5 to 20 atoms and particularly preferably from 1.8 to 5 atoms per one alkenyl group in component (A).

Examples of component (C) include carbon-based conductive agents such as carbon black, carbon fibers, carbon nanofibers, carbon nanotubes, graphite, and graphene; metal powders such as gold, silver, and nickel; conductive zinc oxide, conductive titanium oxide, conductive aluminum oxide; and conductive fillers conductively applied to filler surfaces by metal plating various filler surfaces. These conductive fillers may be used alone or in combinations of two or more types as long as the object of the present invention is not inhibited.

The compounded amount of these conductive fillers is preferably from 1 to 100 parts by mass and particularly preferably from 5 to 70 parts by mass per 100 parts by mass of component (A). This is because the desired electrical conductivity may not be achieved when the amount is less than the lower limit of the range described above, and a favorable sponge may not be obtained when the amount exceeds the upper limit of the range described above.

Component (C) is particularly preferably carbon black since good conductivity can be achieved when added in small amounts. A substance commonly used in ordinary conductive rubber compositions may be used as a preferable type of carbon black, but a carbon black within the range of from pH 6 to 10 produced from a low-sulfur starting material is preferable in order to avoid the inhibition of the curing of the composition of the present invention.

Specific examples of preferable types of carbon black include acetylene black, conductive furnace black (CF), superconductive furnace black (SCF), extraconductive furnace black (XCF), conductive channel black (CC), and furnace black or channel black heat-treated at a high temperature of approximately 1500°C. Specific examples of acetylene black include Denka Black (produced by Denki Kagaku Kogyo Co., Ltd.) and Shawnigan Black (produced by Shawnigan Chemical Ltd.). Specific examples of conductive furnace black include Continex CF (produced by the Continental Carbon Company) and VULCAN® C (produced by Cabot, Inc.). Specific examples of superconductive furnace black include Continex SCF (produced by the Continental Carbon Company) and VULCAN® SC (produced by Cabot, Inc.). Specific examples of extraconductive furnace black include Asahi HS-500 (produced by Asahi Carbon Co., Ltd.) and VULCAN® XC-72 (produced by Cabot, Inc.). A specific example of conductive channel black is CORAX L (produced by Degussa Ltd.). Ketjenblack® EC and Ketjenblack® EC-600JD (produced by Ketjenblack International Co., Ltd.), which are types of furnace black, may also be used. Of these, acetylene black is particularly preferable since it has low impurity content as well as a developed secondary structure and yields excellent conductivity. Ketjenblack® EC and Ketjenblack® EC-600JD may also be preferably used since they have a large specific surface area and yield excellent conductivity when blended in small amounts.

When the conductive silicone rubber sponge requires a relatively high electrical resistance, carbon black with a DBP oil absorbency of at most 100 cm³/100 g may be used alone or in combination with the carbon black described above. Examples of carbon black with a DBP absorbency of not more than 100 cm³/100 g include RCF#5 and RCF#10 (produced by Mitsubishi Chemical Co., Ltd.); Asahi #50 and Asahi Thermal (produced by Asahi Carbon Co., Ltd.); and Monarch 120, Black Pearls 120, and Black Pearls 130 (produced by the Cabot Corporation).

Note that it is also possible to use a master batch obtained by mixing the alkenyl group-containing polydiorganosiloxane of component (A) and the carbon black.

The mixture (D) comprising water and an inorganic thickening agent is a component for imparting porosity to the conductive silicone rubber obtained by crosslinking and curing the conductive silicone rubber composition of the present invention - that is, for producing a conductive silicone rubber sponge. The compounded amount of component (D) is from 10 to 250 parts by mass, preferably from 20 to 200 parts by mass, and more preferably from 40 to 150 parts by mass per 100 parts by mass of component (A). This is because when the compounded amount of component (D) is less than 10 parts by mass, it is difficult for the conductive silicone rubber formed by crosslinking and curing the conductive silicone rubber composition of the present invention to become porous - that is, to become a conductive silicone rubber sponge - and when the compounded amount exceeds 250 parts by mass, the strength of the conductive silicone rubber sponge to be formed is impaired.

The water in component (D) is a component for imparting porosity to the conductive silicone rubber - that is, for producing a conductive silicone rubber sponge - when removed from the cured product after the conductive silicone rubber composition of the present invention is crosslinked and cured. The type of water in component (D) is not particularly limited as long as it is clean. Examples include tap water, well water, ion-exchanged water, and distilled water. The water in component (D) is preferably ion-exchanged water from the perspective that the dispersion of component (D) in component (A) is more stable.

The thickener in component (D) is a natural or synthetic inorganic thickener which is blended in order to increase the viscosity of component (D) when mixed with water, to facilitate the dispersion of component (D) in component (A), and to stabilize the state of dispersion of component (D) in component (A). Specific examples include natural or synthetic smectite clays such as bentonite consisting primarily of clay materials such as montmorillonite, hectolite, saponite, sauconite, beidellite, and nontronite; and hydrophilic composite materials comprising the aforementioned thickeners and anionic polymers such as polyacrylic acid. The compounded amount is preferably from 0.1 to 10 parts by mass and more preferably from 0.5 to 5 parts by mass per 100 parts by mass of water in component (D).

Of these, smectite clays such as bentonite (montmorillonite), hectolite clay, and saponite clay are preferable. This is because the increase in viscosity is large when dispersed in water and because the amount of the emulsifier (E) that is used, which is described below, can be reduced. Examples of such readily available smectite clays are Smectone (registered trademark of Kunimine Co., Ltd.) and Lucentite (registered trademark of Corp Chemical Co., Ltd.), which are products of hydrothermal synthesis, and Kunipia (registered trademark of Kunimine Co., Ltd.), Ben-Gel (registered trademark of Hojun Co., Ltd.), bentone (registered trademark of Elementis Specialties, Inc.), and Veegum (registered trademark of Vanderbilt Co., Inc.), which are natural purified products. The pH of these smectite clays is preferably from 5.0 to 9.0 from the perspective of maintaining the heat resistance of the conductive silicone rubber sponge.

The emulsifier of component (E) may be a conventionally known product and may be an anionic, cationic, amphoteric, or nonionic emulsifier. Specific examples include nonionic surfactants such as glycerin fatty acid esters, polyglycerin fatty acid esters, sorbitan fatty acid esters, sucrose fatty acid esters, polyethylene glycol fatty acid esters, polypropylene glycol fatty acid esters, polyoxyethylene glycerin fatty acid esters, polyoxyethylene sorbitan fatty acid esters, polyoxyethylene-polyoxypropylene block copolymers, polyoxyethylene alkyl ethers, polyoxyethylene alkyl phenyl ethers, and polyoxyethylene fatty acid amides; nonionic surfactants comprising a polyorganosiloxane such as polysiloxane-polyoxyethylene graft copolymers; cationic surfactants such as aliphatic amine salts, tertiary ammonium salts, and alkylpyridinium salts; anionic surfactants such as higher fatty acid salts, higher alcohol sulfuric acid ester salts, alkylbenzene sulfates, alkylnaphthalene sulfates, and polyethylene glycol sulfuric acid ester salts; and carboxybetaine or glycine type amphoteric surfactants. Of these, nonionic surfactants are preferable in that they have little effect on the hydrosilylation reaction when component (F) described below is used as a catalyst.

These emulsifiers may be used alone or in combinations of two or more types. The HLB value of the emulsifier (which is the weight average HLB value when two or more types are used in combination) is preferably not less than 1 and not more than 10, more preferably not less than 1.5 and less than 6, and particularly preferably not less than 3.5 and less than 6. The compounded amount of the emulsifier (E) is from 0.1 to 15 parts by mass and preferably from 0.2 to 3 parts by mass per 100 parts by mass of component (A).

The hydrosilylation reaction catalyst (F) is preferably at least one type of a catalyst selected from platinum catalysts, palladium catalysts, and rhodium catalysts, for example. More specifically, platinum catalysts such as chloroplatinic acid, alcohol-modified chloroplatinic acid, coordination compounds of chloroplatinic acid and olefins, vinylsiloxanes, or acetylene compounds, and microparticulate platinum catalysts prepared by dispersing these compounds in a thermoplastic resin; tetrakis(triphenylenephosphine)palladium, and chlorotris(triphenylphosphine)rhodium may be used, and platinum catalysts are particularly preferable. Of these, microparticulate platinum catalysts prepared by dispersing a platinum catalyst in a thermoplastic resin are preferable in that they prevent the undesired curing of the composition in the mixing apparatus. Component (F) should be used in an effective amount as a catalyst (so-called catalytic amount). Specifically, component (F) may be blended at a ratio of from approximately 0.01 to 500 ppm and preferably from approximately 0.1 to 100 ppm when the amount of the catalyst (metal element content) is calculated in parts by mass per the total amount of components (A) and (B).

The microparticulate platinum catalyst prepared by dispersing a platinum catalyst in a thermoplastic resin is preferably a microparticulate platinum catalyst which comprises a thermoplastic resin containing at least 0.01 weight% of a platinum catalyst as platinum metal atoms and having a softening point of from 40 to 200°C and preferably from 50 to 100°C and which has an average particle diameter of from 0.01 to 500 $\mu$m. Examples of thermoplastic resins include thermoplastic silicone resins having a softening point containing a siloxane unit represented by the formula $C_6H_5SiO_{3/2}$ as a primary component as well as a siloxane unit represented by the formula $(C_6H_5)_2SiO_{2/2}$, a siloxane unit represented by the formula $CH_3SiO_{3/2}$, a siloxane unit represented by the formula $(CH_3)_2SiO_{2/2}$, a siloxane unit represented by the formula $CH_3(CH_2=CH)SiO_{2/2}$, a siloxane unit represented by the formula $CH_3(C_6H_5)SiO_{2/2}$, and a siloxane unit represented by the formula $(CH_3)_3SiO_{1/2}$; acrylic resins, polycarbonate resins, polystyrene resins, methylcellulose resins, polysilane resins, nylon resins, polyester resins, and polypropylene resins. The softening point of these thermoplastic resins is determined by observing the state in which the resin softens on a hot plate that can be heated at a constant temperature under a microscope.

An example of the method of preparing a microparticulate platinum catalyst prepared by dispersing a platinum catalyst in a thermoplastic resin is vapor phase drying, wherein a platinum catalyst and a thermoplastic resin are first mixed uniformly in a solvent, and the mixture is then vaporized using a spray dryer or the like.

The curing retarder (G) is a component for adjusting the curing rate or the operable time of the conductive sponge-forming silicone rubber composition of the present invention. Specific examples include alcohol derivatives having triple carbon-carbon bonds such as 3-methyl-1-butyn-3-ol, 3,5-dimethyl-1-hexyn-3-ol, phenylbutynol, and 1-ethynyl-1-cyclohexanol; enyne compounds such as 3-methyl-3-penten-1-yne and 3,5-dimethyl-3-hexen-1-yne; alkenyl group-containing low-molecular weight siloxanes such as tetramethyltetravinylcyclotetrasiloxane and tetramethyltetrahexenylcyclotetrasiloxane; and alkyne-containing silanes such as methyl-tris(3-methyl-1-butyn-3-oxy)silane and vinyl-tris(3-methyl-1-butyn-3-oxy)silane.

The compounded amount of component (G) is selected appropriately in accordance with the usage method or the molding method of the conductive sponge-forming silicone rubber composition of the present invention. The compounded amount is typically within the range of from 0.001 to 5 parts by mass per 100 parts by mass of component (A).

It is preferable to further blend a reinforcing fine silica powder (H) from the perspective of improving the strength of the conductive silicone rubber sponge formed from the conductive sponge-forming silicone rubber composition of the present invention. Component (H) is not particularly limited, but fumed silica and precipitated silica are preferable. These fine silica powders may be surface-treated with a chain polyorganosiloxane, a cyclic polyorganosiloxane, hexamethyldisilazane, or various organosiloxanes, for example. The specific surface area of the reinforcing fine silica powder of the present invention is preferably from 50 to 350 m$^2$/g and particularly preferably from 80 to 250 m$^2$/g. For example, the specific surface area can be found by the BET absorption method.

The compounded amount of component (H) is preferably not more than 20 parts by mass (that is, from 0 to 20 parts by mass), more preferably from 0 to 15 parts by mass, and even more preferably from 0 to 10 parts by mass per 100 parts by mass of component (A).

In addition, various additives known to be added and blended into conventional silicone rubbers may be blended, examples of which include reinforcement fillers such as fumed titanium oxide; non-reinforcement fillers such as crushed quartz, crystalline silica, diatomaceous earth, asbestos, aluminosilicic acid, iron oxide, zinc oxide, and calcium carbonate; and the aforementioned fillers that are surface-treated with an organic silicon compound such as an organosilane or polyorganosiloxane. If necessary, known additives such as pigments, heat resistant agents, flame retardants, mold release agents, plasticizers, acid receptors and nonfunctional silicone oils, or other conventional additives may be blended into silicone rubber compositions.

Since the conductive silicone rubber composition of the present invention contains water, a preservative or an antirust agent may also be blended. Examples of preservatives include paraoxybenzoic acid alkyl ester, benzoic acid, sodium benzoate, sorbic acid, potassium sorbate, phenoxyethanol, salicylic acid, carbolic acid, parachlormethacresol, hexachlorophene, benzalkonium chloride, chlorhexidine chloride, trichlorocarbanilide, trichlosan, photosensitive pigments; and thiazoline, isothiazoline, biguanide, triazine, iodine, imidazole, and pyridine preservatives. Of these, thiazoline or isothiazoline preservatives are preferable from the perspective that they exhibit a preserving effect when used in minute quantities. The compounded amount of the preservative is typically from 0.001 to 5 parts by mass per 100 parts by mass of the composition of the present invention.

The conductive silicone rubber composition of the present invention can be easily produced by uniformly mixing a composition containing each of the components described above and various additives if necessary using a known kneading means. Examples of the mixer used here include a homomixer, a paddle mixer, a homodisper, a colloid mill, and a vacuum agitator, but the mixer is not particularly limited as long as it is capable of sufficiently dispersing components (C), (D), and (E) in component (A).

A conductive silicone rubber composition containing components (A) to (G) or components (A) to (H) can be produced with the following method, for example. When component (H) is blended, it is preferable to first prepare a silica master batch by blending part of component (A) and component (H) in advance and then mix the remaining part of component (A) with the other components.

Specific examples include a method of loading components (A), (B), (C), (D), (E), (G), and, if necessary, (H) into a mixer, stirring and mixing for a prescribed amount of time, and blending component (F) using a mixing apparatus such as a static mixer or a dynamic mixer, for example, immediately before use; a method of loading components (A), (C), (D), (E), (F), and, if necessary, (H) into a mixer, stirring and mixing for a prescribed amount of time, and blending components (B) and (G) using a mixing apparatus such as a static mixer or a dynamic mixer, for example, immediately before use; and a method of loading components (A), (C), (D), (E), and, if necessary, (H) into a mixer, stirring and mixing for a prescribed amount of time, and blending components (B), (F), and (G) using a mixing apparatus such as a static mixer or a dynamic mixer, for example, immediately before use.

From the perspective of storage stability, the conductive sponge-forming liquid silicone rubber composition is preferably prepared by storing a plurality of at least two compositions separately and mixing the plurality of separately stored compositions immediately before molding using a mixing apparatus such as a static mixer or a dynamic mixer.

Specific examples include a two-component conductive sponge-forming liquid silicone rubber composition comprising: (I) a separately stored composition which contains components (A), (C), (D), (E), (F), and, if necessary, (H) but does not contain components (B) and (G); and (II) a separately stored composition which contains components (B) and (G) but does not contain components (C), (D), and (F); a three-component conductive sponge-forming liquid silicone rubber composition comprising: (I) a separately stored composition which contains components (A), (C), (F), and, if necessary, (H) but does not contain components (B), (D), and (E); (II) a separately stored composition which contains components (A), (B), (C), (E), (G), and, if necessary, (H) but does not contain components (D) and (F); and (III) a separately stored composition which contains component (D) but does not contain components (A) and (B); a three-component conductive sponge-forming liquid silicone rubber composition comprising: (I) a separately stored composition which contains components (A), (C), (E), (F), and, if necessary, (H) but does not contain components (B) and (D); (II) a separately stored composition which contains components (A), (B), (C), (E), (G), and, if necessary, (H) but does not contain components (D) and (F); and (III) a separately stored composition which contains component (C) but does not contain components (A) and (B); a three-component conductive sponge-forming liquid silicone rubber composition comprising: (I) a separately stored composition which contains components (A), (C), (F), and, if necessary, (H) but does not contain components (B) and (D); (II) a separately stored composition which contains components (A), (B), (C), (G), and, if necessary, (H) but does not contain components (D) and (F); and (III) a separately stored composition which contains components (D) and (E) but does not contain components (A) and (B); and a four-component conductive sponge-forming liquid silicone rubber composition comprising: (I) a separately stored composition which contains components (A), (F), and, if necessary, (H) but does not contain components (B), (C), and (D); (II) a separately stored composition which contains components (A), (B), (E), (G), and, if necessary, (H) but does not contain components (C), (D), and (F); (III) a separately stored composition which contains component (D) but does not contain components (A), (B), and (C); and (IV) a separately stored composition which contains component (C) but does not contain components (B) and (D).

Next, the method of producing the silicone-rubber sponge of the present invention will be described in detail.

The method of producing the silicone rubber sponge of the present invention comprises the following steps 1 to 3. Components (A) to (H) in step 1 described below are as described above.

Step 1: A step of preparing a sponge-forming liquid silicone rubber composition comprising at least the following components (A) to (G).

(A) 100 parts by mass of an alkenyl group-containing polydiorganosiloxane composed of:

(A1) from 0 to 90 parts by mass of a polydiorganosiloxane having both molecular terminals capped with alkenyl groups and not having any alkenyl groups in molecular side chains; and
(A2) from 10 to 100 parts by mass of a polydiorganosiloxane having two or more alkenyl groups in molecular side chains;

(B) a polyorganosiloxane having at least two silicon-bonded hydrogen atoms in a molecule, in an amount such that the number of moles of silicon-bonded hydrogen atoms in component (B) is from 0.4 to 20 per 1 mole of alkenyl groups in component (A);
(C) from 1 to 100 parts by mass of a conductive filler;
(D) from 10 to 250 parts by mass of a mixture comprising water and an inorganic thickener;
(E) from 0.1 to 15 parts by mass of an emulsifier;
(F) a hydrosilylation reaction catalyst, in an amount sufficient for crosslinking the composition; and
(G) from 0.001 to 5 parts by mass of a curing retarder.

Step 2: A step of obtaining a silicone rubber molded body in a hydrated state by crosslinking and curing the conductive sponge-forming liquid silicone rubber composition obtained in step 1.

Step 3: A step of obtaining a conductive silicone rubber sponge by removing the water from the silicone rubber molded body in a hydrated state obtained in step 3.

In addition, the conductive sponge-forming liquid silicone rubber composition described above preferably further contains a fine silica powder (H) within the range of from 0.01 to 20 parts by mass per 100 parts by mass of component (A) from the perspective of improving the strength of a conductive silicone rubber sponge obtained by the production method of the present invention. Component (H) is as described above.

Examples of step 1 in the method of producing the conductive silicone rubber sponge of the present invention include (i) a batch method of loading a plurality of separately stored compositions into a mixing apparatus and mixing to prepare a conductive sponge-forming liquid silicone rubber composition and then storing the composition in a tank or the like; (ii) a continuous method of individually storing a plurality of separately stored compositions in containers, supplying the compositions to a mixing apparatus with a weighing and feeding apparatus connected to each container, mixing, and continuously supplying a conductive sponge-forming liquid silicone rubber composition to step 2 in an amount used for molding; and (iii) a method combining the batch method and the continuous method described above. However, the method is not limited to these examples and may be selected appropriately in accordance with the type, shape or size, and molding method of the target conductive silicone rubber sponge product.

In addition, as step 1 described above, the conductive sponge-forming liquid silicone rubber may be prepared in one step by mixing a plurality of separately stored compositions, or the conductive sponge-forming liquid silicone rubber may be prepared in a plurality of steps. Examples of preparation methods for the conductive sponge-forming liquid silicone rubber using a plurality of steps include a method of preparing a mixture by mixing a plurality of separately stored compositions and then preparing a conductive sponge-forming liquid silicone rubber by mixing the remaining separately stored compositions into the aforementioned mixer; and a method of preparing a first mixture by mixing a plurality of separately stored compositions, preparing a second mixture by mixing the remaining separately stored compositions, and then preparing a conductive sponge-forming liquid silicone rubber by mixing the first and second mixtures.

In step 1, the hardness or physical properties of the resulting conductive silicone rubber sponge can be changed as necessary by changing the compounded amount of component (B).

In step 1, the volume resistivity of the resulting conductive silicone rubber sponge can be changed as necessary by changing the compounded amount of component (C).

In step 1, the density of the resulting conductive silicone rubber sponge can be changed as necessary by changing the compounded amount of component (D).

The method of crosslinking and curing the sponge-forming liquid silicone rubber composition of step 2 in the method of producing the silicone rubber sponge of the present invention is not particularly limited, but the sponge-forming liquid silicone rubber composition prepared in step 1 is preferably heated at a temperature of less than 120°C, preferably less than 100°C, and particularly preferably from 50 to 90°C. Specific examples include a method of injecting the sponge-forming liquid silicone rubber composition prepared in step 1 into the cavity of a mold for molding and holding the composition under pressure at a temperature of less than 100°C and preferably from 50 to 90°C to mold a silicone rubber molded body in a hydrated state; a method of coating a peelable substrate such as a resin film with the sponge-forming liquid silicone rubber composition prepared in step 1 and curing by heating to a temperature of from 50 to 120°C, for example, to mold a silicone rubber molded body in a hydrated state; a method of coating a substrate such as a synthetic fiber cloth, a resin film, a metal film, a metal plate, or a glass cloth with the sponge-forming liquid silicone rubber composition prepared in step 1 and heating to a temperature of from 50 to 120°C, for example, to form a silicone rubber coating layer in a hydrated state on the substrate; and a method of discharging the sponge-forming liquid silicone rubber composition prepared in step 1 from a nozzle and introducing the composition into warm water at a temperature of from 80 to 100°C, for example, to mold a silicone rubber molded body in a hydrated state.

The method of removing water from the silicone rubber molded body in a hydrated state in step 3 of the method of producing the silicone rubber sponge of the present invention is not particularly limited, but the water is preferably removed by heating the silicone rubber molded body in a hydrated state prepared in step 2 at a temperature of from 120 to 250°C. In step 2, when a substrate such as a synthetic fiber cloth, a resin film, a metal film, a metal plate, or a glass cloth is coated with the sponge-forming liquid silicone rubber composition and the silicone rubber molded body in a hydrated state is continuously formed on the substrate by means of hot air or infrared rays, step 2 and step 3 may be advanced simultaneously. However, in order to obtain a silicone rubber sponge layer having uniform and fine pores, it is preferable even in such a continuous molding step to cure the composition while maintaining the hydrated state of the sponge-forming liquid silicone rubber composition as much as possible at a temperature of less than 120°C (step 2) and to then remove the water from the silicone rubber molded body in a hydrated state by heating the composition at a temperature of at least 120°C and preferably from 120 to 250°C (step 3).

Next, the conductive silicone rubber sponge of the present invention will be described in detail.

At least 90% of the pores of the conductive silicone rubber sponge of the present invention are preferably continuous pores from the perspective that thermal deformation (thermal expansion) due to heating is low and the deformation restoration properties are excellent. Here, it can be investigated whether the pores are continuous pores by immersing the conductive silicone rubber sponge in water and replacing the air in the continuous pores with water by reducing the pressure. The percentage of continuous pores out of all of the pores in the sponge - that is, the continuous porosity - can be determined from the following formula, assuming that the water density is 1.0 g/cm$^3$.

$$\text{Continuous porosity (\%)} = [(\text{mass of absorbed water}) / (\text{volume of pores})] \times 100$$

The volume of pores in the formula can be determined from the following formula.

$$\text{Volume of pores (cm}^3) = [(\text{sponge mass}) / (\text{sponge density})] - [(\text{sponge mass}) / (\text{rubber density})]$$

The rubber density in the formula is a value obtained by measuring the density of a silicone rubber molded body obtained by crosslinking and curing a sponge-forming liquid silicone rubber composition prepared in the same manner with the exception that the composition does not contain components (D) and (E), and this value represents the density of the sponge pore walls.

Conductive silicone rubber composition of the present invention preferably has a volume resistivity when a 5 V voltage is applied of from $1 \times 10^1$ to $1 \times 10 \Omega \cdot cm$, more preferably from $1 \times 10^2$ to $1 \times 10^{11} \Omega \cdot cm$, and even more preferably from $1 \times 10^3$ to $1 \times 10^9 \Omega \cdot cm$.

The conductive silicone rubber composition of the present invention is useful as an elastic material of a roll or a belt of an image forming apparatus since it has a low coefficient of shrinkage and excellent mold cavity shape reproducibility and can form a conductive sponge having fine, uniform, and continuous porosity. In the case of a roll, the conductive silicone rubber sponge layer is formed on a metal core serving as a substrate, but in this case, the material, dimensions, and the like of the metal core serving as a substrate can be selected appropriately in accordance with the type of the roll. In the case of a belt, the conductive silicone rubber sponge layer is formed on an endless belt serving as a substrate, but in this case, the material, dimensions, and the like of the endless belt serving as a substrate can be selected appropriately in accordance with the type of the belt.

A fluorine resin layer or a fluorine rubber layer may be further provided on the outer periphery of the conductive silicone rubber sponge layer described above. In this case, a fluorine resin layer is formed by a fluorine resin coating material or a fluorine resin tube to coat the conductive silicone rubber sponge layer described above. Here, examples of fluorine resin coating materials include latex of a polytetrafluoroethylene resin (PTFE) and Daiel latex (a fluorolatex produced by Daikin Industries Co., Ltd.). A commercially available product may be used as the fluorine resin tube, and examples include a polytetrafluoroethylene resin (PTFE), a tetrafluoroethylene-perfluoroalkylvinylether copolymer resin (PFA), a fluorinated ethylene-polypropylene copolymer resin (FEP), a polyfluorovinylydene resin (PVDF), and a polyfluorinated vinyl resin. Of these, PFA is particularly preferable.

The thickness of the conductive silicone rubber sponge layer described above is selected appropriately but is preferably from 0.05 to 80 mm and is particularly preferably from 0.1 to 50 mm from the perspective of effectively use the rubber resilience of the conductive silicone rubber sponge. The thickness of the fluorine rein or fluorine rubber layer formed thereon is preferably from 5 to 200 $\mu$m and particularly preferably from 10 to 100 $\mu$m.

Examples

Hereinafter, the present invention is described in detail with reference to Practical Examples and Comparative Examples, but it should be understood that the present invention is not limited to these Practical Examples.

[Density]

Density was measured in accordance with JIS K 6268.

[Hardness (JIS-A)]

The hardness was measured in accordance with a test method using a type A hardness tester prescribed by JIS K 6253.

[Hardness (Asker C)]

The hardness was measured in accordance with a test method using a type C hardness tester prescribed by JIS K 7312. Two test pieces with a thickness of 6 mm were stacked and used.

[Tensile strength and elongation]

Tensile strength and elongation were measured in accordance with JIS K 6251.

[Rebound resilience]

The rebound resilience was measured in accordance with JIS K 6255 using a Lubke rebound resilience tester prescribed by JIS K 6255.

[Volume resistivity]

A silicone rubber sponge with a thickness of 2 mm was placed on a metal plate made from SUS304, and a cylindrical electrode made from SUS304 with a diameter of 50 mm was placed on the sponge. The volume resistivity was measured when the metal plate and the electrode were connected to a Hi Tester 3222 manufactured by the Hioki E.E.

Corporation and voltages of 5 V, 250 V, 500 V, and 1,000 V were applied. The volume resistivity was read 60 seconds after the electrode was placed on the rubber sheet. The average values of five measurements are shown in Tables 1 and 2.

The time dependence of the volume resistivity of the silicone rubber sponge was determined by measuring the change in volume resistivity after 2 to 600 seconds passed at an applied voltage of 5 V in the method described above. The average values of five measurements are shown in Table 3.

[Continuous porosity]

The mass and density of a silicone rubber sponge test piece for compression set prescribed by JIS K 6262 were measured and substituted into the following formula to determine the volume of the pores. The rubber density in the formula is the density of a compression set test piece formed by crosslinking and curing a silicone rubber composition prepared in the same manner with the exception that the composition does not contain components (C) and (D).

$$\text{Volume of pores} = [(\text{sponge mass}) / (\text{sponge density})] - [(\text{sponge mass}) / (\text{rubber density})]$$

Further, a sponge specimen was held in water and left for three minutes at a reduced pressure of -750 mmHg to absorb water. The mass of the absorbed water was measured and substituted into the following formula to determine the continuous porosity, assuming a water density of 1.0 g/cm$^3$.

$$\text{Continuous porosity (\%)} = [(\text{mass of absorbed water}) / (\text{volume of pores})] \times 100$$

[Average pore size]

The central region of a test piece for hardness measurements cut out with a razor blade was observed under a scanning-type electron microscope, and the average pore diameter was measured by measuring the diameter of pores per 0.04 mm$^2$ of area (the number of pores was from approximately 200 to 300) and finding the average (arithmetic average). The diameter of the largest pores observed at the time of the average pore diameter measurement was defined as the maximum pore diameter.

[Preparation Example 1]

A carbon black master batch c-1 with fluidity was prepared by loading 80 parts by mass of dimethylsiloxane-methylvinylsiloxane copolymer capped at both molecular terminals by trimethylsiloxy groups and having a viscosity of 8,000 mPa·s (vinyl group content: 0.30% by mass) and 20 parts by mass of acetylene black (Denka Black produced by Denki Kagaku Kogyo Kabushiki Kaisha) into a Ross mixer, mixing at room temperature until uniform, and then passing the mixture through a three-roll mill five times.

[Preparation Example 2]

A carbon black master batch c-2 with fluidity was prepared by loading 65 parts by mass of dimethylsiloxane-methylvinylsiloxane copolymer capped at both molecular terminals by trimethylsiloxy groups and having a viscosity of 40,000 mPa·s (vinyl group content: 0.13% by mass) and 35 parts by mass of acetylene black (Denka Black produced by Denki Kagaku Kogyo Kabushiki Kaisha) into a Ross mixer, mixing at room temperature until uniform, and then passing the mixture through a three-roll mill five times.

[Preparation Example 3]

A mixture d-1 of water and an inorganic thickener was prepared by loading 1 part by mass of a smectite clay (organic polymer composite hydrophilic purified bentonite (pH 6.5), produced by Hojun Co., Ltd.) and 99 parts by mass of ion-exchanged water into a homomixer and mixing at room temperature until uniform.

[Practical Examples 1 to 6]

The carbon black master batches and components (A), (D) and (E) were loaded into a homomixer (manufactured by Tokushu Kika Co., Ltd.) at the compounding ratios (part by mass) shown in Table 1 and were mixed at 25°C until uniform. Next, a conductive sponge-forming liquid silicone rubber composition was prepared by blending components (B), (F) and (G) into the resulting mixture and deaerating the mixture.
The resulting conductive sponge-forming liquid silicone rubber composition was crosslinked and cured for 10 minutes at 90°C using a compression molding machine to obtain various test pieces in a hydrated state. Next, these test pieces were left in a free state for 4 hours at 200°C to remove the water in the test pieces, and conductive silicone rubber sponge test pieces were obtained. These conductive silicone rubber sponge test pieces were used to measure the density, hardness, tensile strength, elongation, and volume resistivity. The results of the measurements are shown in Table 1. The cross sections of the resulting conductive silicone rubber sponge test pieces were uniform, and no excessively large pores were observed.

[Comparative Example 1]

A conductive liquid silicone rubber composition was prepared in the same manner as in Practical Example 3 with the exception that components (D) and (E) were not blended, and a silicone rubber test piece was obtained in the same manner as in Practical Example 3. The resulting silicone rubber test piece was used to measure the density, hardness, tensile strength, elongation, and volume resistivity. These results are shown in Tables 2 and 3.

[Comparative Example 2]

78 parts by mass of a dimethylsiloxane-methylvinylsiloxane copolymer raw rubber consisting of 99.85 mol% of dimethylsiloxane units and 0.15 mol% of methylvinylsiloxane units and having both molecular terminals capped with dimethylvinylsiloxy groups (degree of polymerization: 6000), 22 parts by mass of a dimethylsiloxane-methylvinylsiloxane copolymer raw rubber consisting of 99.43 mol% of dimethylsiloxane units and 0.57 mol% of methylvinylsiloxane units and having both molecular terminals capped with dimethylvinylsiloxy groups (degree of polymerization: 6,000), 0.4 parts by mass of a dimethylsiloxane oligomer having a viscosity of 60 mPa·s and having both molecular terminals capped with dimethylhydroxysiloxy groups, and 30 parts by mass of dry silica with a specific surface area of 50 $m^2$/g were placed in a kneader mixer and kneaded uniformly. Next, the mixture was kneaded for 60 minutes at 175°C to obtain a silicone rubber base.
19 parts by mass of acetylene black (Denka Black produced by Denki Kagaku Kogyo Kabushiki Kaisha) was added to 130.4 parts by mass of this silicone rubber base and kneaded at room temperature until uniform to produce a conductive silicone rubber base. Next, 2.0 parts by mass of a 5 mPa·s dimethylsiloxane-methylhydrogensiloxane copolymer having both molecular terminals capped with trimethylsiloxy groups (silicon-bonded hydrogen atom content: 0.75 weight%), 0.012 parts by mass of 1-ethynyl-1-cyclohexanol as a hydrosilylation reaction inhibitor, 0.06 parts by mass of a complex of chloroplatinic acid and tetramethyldivinyldisiloxane (platinum content: 0.6 weight%), and 1.5 parts by mass of azobisisobutyronitryl were added to 100 parts by mass of this conductive silicone rubber base and kneaded uniformly on two rolls to obtain a conductive silicone rubber sponge-forming composition. The resulting sponge-forming liquid silicone rubber composition was crosslinked and cured for 10 minutes at 170°C using a compression molding machine to obtain various test pieces. Next, these test pieces were heat-treated for four hours at 200°C to obtain silicone rubber sponge test pieces. These silicone rubber sponge test pieces were used to measure the density, hardness, tensile strength, elongation, and volume resistivity. These results are shown in Tables 2 and 3.

Table 1

| | Practical Example 1 | Practical Example 2 | Practical Example 3 | Practical Example 4 | Practical Example 5 | Practical Example 6 |
|---|---|---|---|---|---|---|
| c-1 | 50 | 25 | 19.8 | 13.5 | 25 | 13.5 |
| c-2 | | | | 17.1 | 17.1 | 28.6 |
| a-1 | 60 | 80 | 84,2 | 78.1 | 68.9 | 70.6 |
| b-1 | 5.25 | 5.25 | 5.25 | 5.25 | 5.25 | 5.25 |
| d-1 | 127.5 | 127.5 | 127.5 | 127.5 | 127.5 | 127.5 |
| e-1 | 1.2 | 1.2 | 1.2 | 1.2 | 1.2 | 1.2 |
| e-2 | 1.9 | 1.9 | 1.9 | 1.9 | 1.9 | 1.9 |
| F Hydrosilylation catalyst | 0.9 | 0.9 | 0.9 | 0.9 | 0.9 | 0.9 |
| G Curing retarder master batch | 0.35 | 0.35 | 0.35 | 0.35 | 0.35 | 0.35 |
| | | | | | | |
| Density (g/cm$^3$) | 0.45 | 0.44 | 0.45 | 0.42 | 0.42 | 0.42 |
| Hardness (JIS-A) | 14 | 12 | 12 | 10 | 11 | 11 |
| Hardness (ASKER-C) | 26 | 23 | 26 | 22 | 23 | 23 |
| Tensile strength (MPa) | 0.4 | 0.2 | 0.2 | 0.2 | 0.2 | 0.2 |
| Elongation (%) | 66 | 57 | 64 | 50 | 58 | 50 |
| Rebound resilience (%) | 66 | 65 | 65 | 62 | 63 | 63 |
| Continuous porosity (%) | 100 | 100 | 100 | 100 | 100 | 100 |
| Average pore size ($\mu$m) | 13 | 13 | 13 | 13 | 13 | 13 |
| Maximum pore size ($\mu$m) | 27 | 29 | 30 | 28 | 28 | 31 |
| Voltage dependence of volume resistivity | | | | | | |
| 5V ($\Omega \cdot$cm) | 4.4 E+03 | 3.0 E+04 | 7.9 E+05 | 8.9 E+05 | 8.0 E+04 | 1.1 E+05 |
| 250V ($\Omega$.cm) | | | 4.9 E+05 | 6.1 E+05 | 5.0 E+04 | 9.0 E+04 |
| 500V ($\Omega \cdot$cm) | | | 4.9 E+05 | 5.0 E+05 | 4.1 E+04 | 8.3 E+04 |
| 1,000V ($\Omega$.cm) | | | 4.9 E+05 | 2.9 E+05 | 3.8 E+04 | 5.1 E+04 |

Table 2

| | Comparative Example 1 | Comparative Example 2 |
|---|---|---|
| c-1 | 19.8 | |
| c-2 | | |

(continued)

| | | Comparative Example 1 | Comparative Example 2 |
|---|---|---|---|
| a-1 | | 84.2 | |
| b-1 | | 5.25 | |
| d-1 | | | |
| e-1 | | | |
| e-2 | | | |
| F Hydrosilylation catalyst | | 0.9 | |
| G Curing retarder master batch | | 0.35 | |
| | | | |
| Density | (g/cm$^3$) | 1.06 | 0.96 |
| Hardness | (JIS-A) | 13 | 26 |
| Hardness | (ASKER-C) | 30 | 43 |
| Tensile strength | (MPa) | 0.9 | 1.4 |
| Elongation | (%) | 260 | 200 |
| Rebound resilience | (%) | 62 | 67 |
| Continuous porosity | (%) | - | |
| Average pore size | ($\mu$m) | - | |
| Maximum pore size | ($\mu$m) | - | |
| Voltage dependence of volume resistivity | | | |
| 5V | ($\Omega \cdot$cm) | 2.2 E+05 | 2.4 E+05 |
| 250V | ($\Omega$.cm) | 2.2 E+04 | 2.0 E+04 |
| 500V | ($\Omega$.cm) | 1.5 E+04 | 9.8 E+03 |
| 1,000V | ($\Omega \cdot$cm) | 9.8 E+03 | 7.9 E+03 |

Table 3

| | Practical Example 1 | Practical Example 2 | Comparative Example 1 |
|---|---|---|---|
| Time dependence of volume resistivity | | | |
| After 2 seconds | 4.9 E+03 | 3.6 E+04 | 1.5 E+05 |
| After 30 seconds | 4.5 E+03 | 3.2 E+04 | 8.2 E+04 |
| After 60 seconds | 4.4 E+03 | 3.0 E+04 | 7.4 E+04 |
| After 120 seconds | 4.3 E+03 | 2.9 E+04 | 6.7 E+04 |
| After 180 seconds | 4.2 E+03 | 2.8 E+04 | 6.3 E+04 |
| After 240 seconds | 4.1 E+03 | 2.8 E+04 | 6.0 E+04 |
| After 300 seconds | 4.1 E+03 | 2.8 E+04 | 5.8 E+04 |
| After 600 seconds | 4.0 E+03 | 2.6 E+04 | 5.3 E+04 |

The terms used in Tables 1 and 2 will be described hereinafter.

[Carbon black master batch]

c-1: Carbon black master batch comprising components (A) and (C) prepared in Preparation Example 1. Carbon black content: 20% by mass.
c-2: Carbon black master batch comprising components (A) and (C) prepared in Preparation Example 2. Carbon black content: 35% by mass.

[Component (A)]

a-1: Dimethylsiloxane-methylvinylsiloxane copolymer having a viscosity of 8,000 mPa·s and having both molecular terminals capped with trimethylsiloxy groups. Vinyl group content: 0.13% by mass.
a-2: Dimethylsiloxane-methylvinylsiloxane copolymer having a viscosity of 40,000 mPa·s and having both molecular terminals capped with trimethylsiloxy groups. Vinyl group content: 0.30% by mass.

[Component (B)]

b-1: Dimethylsiloxane-methylhydrogensiloxane copolymer having a kinematic viscosity of 43.5 $mm^2$/s and having both molecular terminals capped with trimethylsiloxy groups. Silicon-bonded hydrogen atom content: approximately 0.69% by mass.

[Component (D)]

d-1: Mixture of water and an inorganic thickener prepared in Preparation Example 3. Smectite clay content: 1.0% by mass.

[Component (E)]

e-1: Nonionic surfactant (sorbitan fatty acid ester, trade name: Rheodol SP-O10V, produced by Kao Corporation). HLB 4.3.
e-2: Nonionic surfactant (sorbitan fatty acid ester, trade name: Rheodol SP-O30V, produced by Kao Corporation). HLB 1.8.

[Component (F)]

Platinum catalyst: 1,3-divinyltetramethyldisiloxane solution of a platinum complex of 1,3-divinyltetramethyldisiloxane. Platinum metal content: approximately 4,000 ppm.

[Component (G)]

Curing retarder: Mixture of 2 parts by mass of ethynylcyclohexanol and 98 parts by mass of dimethylpolysiloxane having a viscosity of 10,000 mPa·s and having both molecular terminals capped with dimethylvinylsiloxy groups.

Industrial Applicability

The conductive sponge-forming silicone rubber composition of the present invention is characterized in that a conductive silicone rubber sponge with excellent moldability and having fine, uniform, and continuous porosity after molding is provided and in that the voltage dependence of the volume resistivity of the resulting conductive silicone rubber sponge is low. The conductive sponge-forming silicone rubber composition of the present invention which yields such stable electrical conductivity can be used in various applications which require conductivity such as electrical/electronic parts, automotive parts, and office equipment parts. Of these, the composition can be suitably used as an elastic material of a roll or belt for an electronic photographic image forming apparatus such as a copy machine, a printer, an on-demand printer, a facsimile machine, or a combined machine thereof. Examples of such rolls or belts include charging rolls, charging belts, developing rolls, developing belts, transfer rolls, transfer belts, intermediate transfer belts, fixing rolls, and fixing belts. Of these, the composition can be suitably used for the elastic materials of development rolls, development belts, fixing rolls, and fixing belts.

**Claims**

1. A conductive sponge-forming liquid silicone rubber composition comprising:

   (A) 100 parts by mass of an alkenyl group-containing polydiorganosiloxane composed of:

      (A1) from 0 to 90 parts by mass of a polydiorganosiloxane having both molecular terminals capped with alkenyl groups and not having any alkenyl groups in molecular side chains; and
      (A2) from 10 to 100 parts by mass of a polydiorganosiloxane having two or more alkenyl groups in molecular side chains;

   (B) a polyorganosiloxane having at least two silicon-bonded hydrogen atoms in a molecule, in an amount such that the number of moles of silicon-bonded hydrogen atoms in component (B) is from 0.4 to 20 per 1 mole of alkenyl groups in component (A);
   (C) from 1 to 100 parts by mass of a conductive filler;
   (D) from 10 to 250 parts by mass of a mixture comprising water and an inorganic thickener;
   (E) from 0.1 to 15 parts by mass of an emulsifier;
   (F) a hydrosilylation reaction catalyst, in an amount sufficient for crosslinking the composition; and
   (G) from 0.001 to 5 parts by mass of a curing retarder; wherein component (C) is carbon black.

2. The conductive sponge-forming liquid silicone rubber composition according to claim 1, further comprising (H) a fine silica powder within a range of not more than 20 parts by mass per 100 parts by mass of component (A).

3. The conductive sponge-forming liquid silicone rubber composition according to claim 1 or 2, wherein component (D) is a mixture of water and smectite clay.

4. The conductive sponge-forming liquid silicone rubber composition according to claim 3, wherein the smectite clay is a hydrophilic composite material comprising a smectite clay and an anionic polymer.

5. The conductive sponge-forming liquid silicone rubber composition according to any one of claims 1 to 4, wherein the molar ratio of silicon-bonded hydrogen atoms in component (B) to one mole of silicon-bonded alkenyl groups in component (A) is within a range of from 1.5 to 20.

6. A conductive silicone rubber sponge obtained by crosslinking and curing the conductive sponge-forming liquid silicone rubber composition described in any one of claims 1 to 5.

7. The conductive silicone rubber sponge according to claim 6, wherein an average pore diameter is not less than 1 $\mu$m and less than 50 $\mu$m, and a continuous porosity is not less than 90%.

8. The conductive silicone rubber sponge according to claim 6 or 7, wherein a volume resistivity of a test piece with a thickness of 2 mm when a 5 V voltage is applied is from $1\times10^1$ to $1\times10^{12}\Omega\cdot$cm.

9. The conductive silicone rubber sponge according to any one of claims 6 to 8, that is for an elastic material for a roll or a belt of an image forming apparatus.

10. The conductive silicone rubber sponge according to claim 9, wherein the roll or belt of an image forming apparatus is a fixing member or a developing member.

11. A method for producing a conductive silicone rubber sponge comprising the following steps 1 to 3:

Step 1: A step of preparing a conductive sponge-forming liquid silicone rubber composition described in any one of claims 1 to 5;
Step 2: A step of obtaining a silicone rubber molded body in a hydrated state by crosslinking and curing the conductive sponge-forming liquid silicone rubber composition obtained in step 1; and
Step 3: A step of obtaining a conductive silicone rubber sponge by removing the water from the silicone rubber molded body in a hydrated state obtained in step 2.

12. A method for producing a conductive silicone rubber sponge comprising the following steps 1 to 3:

Step 1: A step of preparing a conductive sponge-forming liquid silicone rubber composition described in any one of claims 1 to 5;
Step 2: A step of forming a silicone rubber molded body in a hydrated state on a substrate by applying the sponge-forming liquid silicone rubber composition obtained in step 1 on the substrate and crosslinking and curing the composition; and
Step 3: A step of obtaining a conductive silicone rubber sponge by removing the water from the silicone rubber molded body in a hydrated state obtained in step 2.

**Patentansprüche**

1. Leitfähige, schwammbildende, flüssige Silikongummizusammensetzung, umfassend:

(A) 100 Massenteile eines alkenylgruppenhaltigen Polydiorganosiloxans, zusammengesetzt aus:

(A1) von 0 bis 90 Massenteilen eines Polydiorganosiloxans sowohl mit durch Alkenylgruppen verkappten molekularen Termini als ohne Alkenylgruppen in molekularen Seitenketten; und
(A2) von 10 bis 100 Massenteilen eines Polydiorganosiloxans mit zwei oder mehr Alkenylgruppen in molekularen Seitenketten;

(B) ein Polyorganosiloxan mit wenigstens zwei siliciumgebundenen Wasserstoffatomen in einem Molekül, in einer Menge, so dass die Anzahl an Molen siliciumgebundener Wasserstoffatome in Bestandteil (B) von 0,4 bis 20 je 1 Mol der Alkenylgruppen in Bestandteil (A) beträgt;
(C) von 1 bis 100 Massenteilen eines leitfähigen Füllstoffs;
(D) von 10 bis 250 Massenteilen einer Mischung, umfassend Wasser und ein anorganisches Verdickungsmittel;
(E) von 0,1 bis 15 Massenteilen eines Emulgators;
(F) einem Katalysator für eine Hydrosilylierungsreaktion in einer zur Vernetzung der Zusammensetzung ausreichenden Menge; und
(G) von 0,001 bis 5 Massenteilen eines Härtungsverzögerers; wobei Bestandteil (C) Ruß ist.

2. Leitfähige, schwammbildende, flüssige Silikongummizusammensetzung nach Anspruch 1, ferner umfassend (H) ein feines Kieselerdepulver in einem Bereich von nicht mehr als 20 Massenteilen je 100 Massenteilen von Bestandteil (A).

3. Leitfähige, schwammbildende, flüssige Silikongummizusammensetzung nach Anspruch 1 oder 2, wobei Bestandteil (D) eine Mischung aus Wasser und Smectit-Tonerde ist.

4. Leitfähige, schwammbildende, flüssige Silikongummizusammensetzung nach Anspruch 3, wobei die Smectit-Tonerde ein hydrophiles Verbundmaterial, umfassend eine Smectit-Tonerde und ein anionisches Polymer, ist.

5. Leitfähige, schwammbildende, flüssige Silikongummizusammensetzung nach einem der Ansprüche 1 bis 4, wobei das Molverhältnis von siliciumgebundenen Wasserstoffatomen in Bestandteil (B) zu einem Mol siliciumgebundener Alkenylgruppen in Bestandteil (A) innerhalb eines Bereichs von 1,5 bis 20 liegt.

6. Durch Vernetzen und Härten der in einem der Ansprüche 1 bis 5 beschriebenen leitfähigen, schwammbildenden, flüssigen Silikongummizusammensetzung erhaltener leitfähiger Silikongummischwamm.

7. Leitfähiger Silikongummischwamm nach Anspruch 6, wobei ein durchschnittlicher Porendurchmesser nicht weniger als 1 $\mu$m und weniger als 50 $\mu$m beträgt, und eine ununterbrochene Porosität nicht weniger als 90 % beträgt.

**8.** Leitfähiger Silikongummischwamm nach Anspruch 6 oder 7, wobei ein Volumenwiderstand eines Prüfstücks mit einer Dicke von 2 mm, wenn eine Spannung von 5 V angelegt wird, von $1\times10^1$ bis $1\times10^{12}$ Ω·cm beträgt.

**9.** Leitfähiger Silikongummischwamm nach einem der Ansprüche 6 bis 8, der für ein elastisches Material für eine Walze oder einen Gurt eines bildgebenden Apparats bestimmt ist.

**10.** Leitfähiger Silikongummischwamm nach Anspruch 9, wobei die Walze oder der Gurt eines bildgebenden Apparats ein Befestigungselement oder ein Entwicklungselement ist.

**11.** Verfahren zum Herstellen eines leitfähigen Silikongummischwamms, umfassend die folgenden Schritte 1 bis 3:

Schritt 1: ein Schritt des Zubereitens einer in einem der Ansprüche 1 bis 5 beschriebenen leitfähigen, schwammbildenden, flüssigen Silikongummizusammensetzung;
Schritt 2: ein Schritt des Erhaltens eines gegossenen Silikongummikörpers in einem hydratisierten Zustand durch Vernetzen und Härten der in Schritt 1 erhaltenen leitfähigen, schwammbildenden, flüssigen Silikongummizusammensetzung; und
Schritt 3: ein Schritt des Erhaltens eines leitfähigen Silikongummischwamms durch Entfernen des Wassers aus dem in Schritt 2 erhaltenen gegossenen Silikongummikörper in einem hydratisierten Zustand.

**12.** Verfahren zum Herstellen eines leitfähigen Silikongummischwamms, umfassend die folgenden Schritte 1 bis 3:

Schritt 1: ein Schritt des Zubereitens einer in einem der Ansprüche 1 bis 5 beschriebenen leitfähigen, schwammbildenden, flüssigen Silikongummizusammensetzung;
Schritt 2: ein Schritt des Bildens eines gegossenen Silikongummikörpers in einem hydratisierten Zustand auf einem Substrat durch Aufbringen der in Schritt 1 erhaltenen schwammbildenden, flüssigen Silikongummizusammensetzung auf das Substrat und Vernetzen und Härten der Zusammensetzung; und
Schritt 3: ein Schritt des Erhaltens eines leitfähigen Silikongummischwamms durch Entfernen des Wassers aus dem in Schritt 2 erhaltenen gegossenen Silikongummikörper in einem hydratisierten Zustand.

**Revendications**

**1.** Composition de caoutchouc de silicone liquide formant une éponge conductrice comprenant :

(A) 100 parties en masse d'un polydiorganosiloxane contenant des groupes alcényle, composée de :

(A1) de 0 à 90 parties en masse d'un polydiorganosiloxane dont l'une et l'autre des terminaisons moléculaires sont coiffées de groupes alcényle et ne comportant aucun groupe alcényle dans les chaînes latérales moléculaires ; et
(A2) de 10 à 100 parties en masse d'un polydiorganosiloxane comportant deux ou plus de deux groupes alcényle dans les chaînes latérales moléculaires ;

(B) un polyorganosiloxane comportant au moins deux atomes d'hydrogène liés à du silicium dans une molécule, en une quantité telle que le nombre de moles d'atomes d'hydrogène liés à du silicium dans le composant (B) va de 0,4 à 20 pour 1 mole de groupes alcényle dans le composant (A) ;
(C) de 1 à 100 parties en masse d'une charge conductrice ;
(D) de 10 à 250 parties en masse d'un mélange comprenant de l'eau et un épaississant inorganique ;
(E) de 0,1 à 15 parties en masse d'un émulsifiant ;
(F) un catalyseur de réaction d'hydrosilylation, dans une quantité suffisante pour réticuler la composition ; et
(G) de 0,001 à 5 parties en masse d'un retardateur de durcissement ; dans laquelle le composant (C) est du noir de carbone.

**2.** Composition de caoutchouc de silicone liquide formant une éponge conductrice selon la revendication 1, comprenant en outre (H) une poudre de silice fine dans une plage de pas plus de 20 parties en masse pour 100 parties en masse de composant (A).

**3.** Composition de caoutchouc de silicone liquide formant une éponge conductrice selon la revendication 1 ou 2, dans laquelle le composant (D) est un mélange d'eau et d'argile smectique.

**4.** Composition de caoutchouc de silicone liquide formant une éponge conductrice selon la revendication 3, dans laquelle l'argile smectique est un matériau composite hydrophile comprenant une argile smectique et un polymère anionique.

**5.** Composition de caoutchouc de silicone liquide formant une éponge conductrice selon l'une quelconque des revendications 1 à 4, dans laquelle le rapport molaire d'atomes d'hydrogène liés à du silicium dans le composant (B) à une mole de groupes alcényle liés à du silicium dans le composant (A) est dans une plage allant de 1,5 à 20.

**6.** Éponge conductrice en caoutchouc de silicone obtenue par réticulation et durcissement de la composition de caoutchouc de silicone liquide formant une éponge conductrice décrite dans l'une quelconque des revendications 1 à 5.

**7.** Éponge conductrice en caoutchouc de silicone selon la revendication 6, dans laquelle un diamètre moyen de pore n'est pas inférieur à 1 $\mu$m et est inférieur à 50 $\mu$m, et une porosité continue n'est pas inférieure à 90 %.

**8.** Éponge conductrice en caoutchouc de silicone selon la revendication 6 ou 7, dans laquelle une résistivité en volume d'une pièce de test avec une épaisseur de 2 mm lorsqu'une tension de 5 V est appliquée va de $1 \times 10^1$ à $1 \times 10^{12} \Omega \cdot$cm.

**9.** Éponge conductrice en caoutchouc de silicone selon l'une quelconque des revendications 6 à 8, qui est destinée à un matériau élastique pour un rouleau ou une courroie d'un appareil de formation d'image.

**10.** Éponge conductrice en caoutchouc de silicone selon la revendication 9, dans laquelle le rouleau ou la courroie d'un appareil de formation d'image est un élément de fixation ou un élément de développement.

**11.** Procédé de production d'une éponge conductrice en caoutchouc de silicone comprenant les étapes 1 à 3 suivantes :

Étape 1 : une étape de préparation d'une composition de caoutchouc de silicone liquide formant une éponge conductrice décrite dans l'une quelconque des revendications 1 à 5 ;
Étape 2 : une étape d'obtention d'un corps moulé en caoutchouc de silicone dans un état hydraté par réticulation et durcissement de la composition de caoutchouc de silicone liquide formant une éponge conductrice obtenue à l'étape 1 ; et
Étape 3 : une étape d'obtention d'une éponge conductrice en caoutchouc de silicone en éliminant l'eau du corps moulé en caoutchouc de silicone dans un état hydraté, obtenu à l'étape 2.

**12.** Procédé de production d'une éponge conductrice en caoutchouc de silicone comprenant les étapes 1 à 3 suivantes :

Étape 1 : une étape de préparation d'une composition de caoutchouc de silicone liquide formant une éponge conductrice décrite dans l'une quelconque des revendications 1 à 5 ;
Étape 2 : une étape de formation d'un corps moulé en caoutchouc de silicone dans un état hydraté sur un substrat en appliquant la composition de caoutchouc de silicone de formation d'éponge obtenue à l'étape 1 sur le substrat et en réticulant et durcissant la composition ; et
Étape 3 : une étape d'obtention d'une éponge conductrice en caoutchouc de silicone en éliminant l'eau du corps moulé en caoutchouc de silicone dans un état hydraté, obtenu à l'étape 2.

## REFERENCES CITED IN THE DESCRIPTION

**Patent documents cited in the description**

- JP 2012195033 A
- JP 2002114860 A
- WO 2005085357 A
- WO 2004074378 A
- JP 2008214625 A